# EUROPÄISCHE PATENTSCHRIFT

(11) **EP 3 412 496 B1**
(45) Veröffentlichungstag und Bekanntmachung des Hinweises auf die Patenterteilung: **11.01.2023**
(21) Anmeldenummer: 18168677.5
(22) Anmeldetag: 23.04.2018
(51) Int. Cl.: G06Q 10/06, G06Q 10/00, B60L 53/36, B60L 53/60, B60L 53/30

(54) **VERFAHREN UND SYSTEM ZUM VORBEREITEN EINES FAHRZEUGS**
METHOD AND SYSTEM FOR PREPARING A VEHICLE
PROCÉDÉ ET SYSTÈME DE PRÉPARATION D'UN VÉHICULE

(30) Priorität: 08.06.2017 DE 102017209711
(43) Veröffentlichungstag der Anmeldung: 12.12.2018
(73) Patentinhaber: AUDI AG, 85045 Ingolstadt (DE)
(72) Erfinder: Enthaler, Achim, 85049 Ingolstadt (DE); Mürken, Michael, 85049 Ingolstadt (DE); Thanheiser, Andreas, 85072 Eichstätt (DE)

(56) Entgegenhaltungen:
- CN-U- 205 451 297
- US-A1- 2004 083 030
- US-A1- 2012 010 894
- US-A1- 2015 348 335
- "Wash installs charging station for electric vehicles", , 29. Oktober 2015 (2015-10-29), XP002785650, Gefunden im Internet: URL:https://web.archive.org/web/2015103014 2739/http://www.carwash.com/wash-installs- charging-station-electric-vehicles/ [gefunden am 2018-10-12]
- S. Miles: "Formula E racing cars to feature Qualcomm Halo wireless chargin", , 9 September 2013 (2013-09-09), XP055685564, Retrieved from the Internet: URL:https://www.pocket-lint.com/cars/news/ qualcomm/123509-formula-e-racing-cars-to-f eature-qualcomm-halo-wireless-charging [retrieved on 2020-04-14]

## Beschreibung

Die Erfindung betrifft ein Verfahren zum Vorbereiten eines Fahrzeugs auf mindestens eine zukünftige Fahrt, ein Verfahren zum Vorbereiten mehrerer Fahrzeuge auf zukünftige Fahrten und ein System zum Vorbereiten eines Fahrzeugs auf mindestens eine zukünftige Fahrt.

Ein Fahrzeug benötigt zu seiner Fortbewegung Energie. Falls das Fahrzeug hierfür mindestens einen elektrischen Antrieb aufweist, wird diesem aus einem elektrischen Energiespeicher des Fahrzeugs die elektrische Energie bereitgestellt. Allerdings ist hierbei zu berücksichtigen, dass der mindestens eine elektrische Energiespeicher sich im Laufe der Zeit entleert. Deshalb ist es erforderlich, dass ein Fahrer des Fahrzeugs dieses regelmäßig zu einer elektrischen Ladestation fährt, mit der elektrische Energie in den mindestens einen Energiespeicher des Fahrzeugs ladbar ist. Außerdem ist es regelmäßig erforderlich, einen Zustand des Fahrzeugs zu erneuern bzw. aufzufrischen, was bspw. die Maßnahmen umfasst, dass das Fahrzeug innen und außen gereinigt wird oder dass ein weiteres Betriebsmittel des Fahrzeugs ersetzt und/oder erneuert wird.

Ein Verfahren zum Durchführen eines automatischen Parkvorgangs für ein Fahrzeug ist aus der Druckschrift DE 10 2014 221 754 A1 bekannt. Bei diesem Verfahren ist es auch möglich, dass eine Ladefunktion zum Aufladen einer Batterie des Fahrzeugs realisiert wird.

Ein Parkplatzverwaltungsserver für einen Parkplatz ist aus der Druckschrift DE 10 2014 224 113 A1 bekannt. Auch hier ist es möglich, einen elektrischen Energiespeicher des Fahrzeugs aufzuladen.

Die Druckschrift DE 10 2015 201 205 A1 beschreibt ein Verfahren zur optimierten Nutzung einer Parkfläche, auf der Fahrzeuge geparkt werden.

Die Druckschrift US 2015/348335 A1 beschreibt ein Verfahren zum Bereitstellen einer Dienstleistung für ein autonomes Fahrzeug. Dabei wird von dem autonomen Fahrzeug ermittelt, dass ein Service bereitzustellen ist. Weiterhin kann das autonome Fahrzeug hierfür einen Dienstleister auswählen und zu diesem Dienstleister fahren.

Eine emissionsfreie Servicestation für ein Elektrofahrzeug ist aus der Druckschrift US 2012/010894 A1 bekannt und umfasst ein Elektrizitätsbereitstellungssystem mit einer Hauptladeeinheit zum Laden von mindestens einer Batterie im Elektrofahrzeug und ein Kontrollsystem in Verbindung mit dem Elektrofahrzeug und der Hauptladeeinheit.

Die Druckschrift CN 205 451 297 U zeigt eine intelligente Energieservicestation, mit der es möglich ist, eine Batterie eines Fahrzeugs zu laden. Weiterhin umfasst diese Energieservicestation ein Waschmodul und ein automatisches Verkaufsmodul.

Die Druckschrift bzw. der Artikel "Wash installs charging station for electric vehicles" aus dem Internet beschreibt, dass eine Anlage eine Ladestation und eine Waschstation für elektrische Fahrzeuge aufweisen kann.

In der Druckschrift "Formular E racing cars to feature Qualcomm Halo wireless charging" von S. Miles ist angegeben, dass ein Fahrzeug eventuell drahtlos elektrisch aufgeladen werden kann.

Ein straßenseitiges Dienstleistungssystem für ein Fahrzeug ist aus der Druckschrift US2004/083030A1 bekannt. Darin ist ein drahtloses Aufladen des Fahrzeugs beschrieben.

Vor diesem Hintergrund war es eine Aufgabe, für ein Fahrzeug Dienstleistungen bereitzustellen.

Diese Aufgabe wird mit Verfahren und einem System mit den Merkmalen der unabhängigen Patentansprüche gelöst. Ausführungsformen der Verfahren und des Systems gehen aus den abhängigen Patentansprüchen und der Beschreibung hervor.

Das erfindungsgemäße Verfahren ist zum Vorbereiten eines Fahrzeugs auf mindestens eine zukünftige Fahrt, d. h. eine Fahrt oder mehrere Fahrten, vorgesehen, wobei das Fahrzeug mindestens einen elektrischen Energiespeicher aufweist, mit dem mindestens eine zum Antreiben des Fahrzeugs ausgebildete Elektromaschine des Fahrzeugs mit elektrischer Energie versorgt wird und/oder zu versorgen ist. Das Verfahren wird u. a. mit einem System durchgeführt, das mindestens eine elektrische Ladestation und mehrere Dienstleistungsstationen bzw. Servicestationen aufweist. Dabei wird das Fahrzeug dem System und weiterhin den Dienstleistungsstationen zugeordnet, mit denen für das Fahrzeug mindestens eine Dienstleistung bzw. mindestens ein Service bereitgestellt wird. Währenddessen, d. h. während einer Bereitstellung der mindestens einen Dienstleistung, wird der mindestens eine elektrische Energiespeicher mit der mindestens einen elektrischen Ladestation verbunden und durch diese mindestens eine elektrische Ladestation mit elektrischer Energie versorgt, wobei ein Aufenthalt des Fahrzeugs innerhalb des Systems vorab geplant wird, wobei die Planung umfasst, in welcher Reihenfolge das Fahrzeug einer jeweiligen Dienstleistungsstation zuzuordnen ist, wobei das System mindestens ein elektrisches Übertragungsmodul aufweist, das dazu ausgebildet ist, die mindestens eine elektrische Ladestation zum Übertragen der elektrischen Energie mit dem mindestens einen elektrischen Energiespeicher zu verbinden, wobei das mindestens eine elektrisches Übertragungsmodul zwischen mehreren Dienstleistungsstationen angeordnet ist und mehrere Dienstleistungsstationen miteinander verbindet und als Stromschiene ausgebildet ist, wobei dem Fahrzeug durch mindestens eine Dienstleistungsstation simultan zur Durchführung des Ladevorgangs mindestens eine Dienstleistung bereitgestellt wird, wobei das Fahrzeug ein als Stromabnehmer ausgebildetes elektrisches Übertragungsmodul aufweist, wobei über die mindestens zwei in elektrisch leitendem Kontakt stehenden elektrischen Übertragungsmodule Energie ausgehend von der Ladestation zu dem mindestens einen elektrischen Energiespeicher übertragen wird, wobei es möglich ist, dass sich das Fahrzeug relativ zu der Stromschiene bewegt.

Somit wird dem Fahrzeug in Ausgestaltung von mindestens einer Dienstleistungsstation die mindestens eine Dienstleistung breitgestellt, wobei es gleichzeitig oder zeitversetzt möglich ist, dass der mindestens eine elektrische Energiespeicher von der mindestens einen Ladestation mit elektrischer Energie versorgt wird. Bei Durchführung des Verfahrens wird der mindestens eine elektrische Energiespeicher des Fahrzeugs unter Durchführung eines elektrischen Ladevorgangs geladen und in der Regel zugleich die mindestens eine Dienstleistung für das Fahrzeug bereitgestellt. Dabei ist es möglich, dass das Fahrzeug über einen Zeitraum mit einer Ladestation verbunden ist und währenddessen zuerst einer ersten Dienstleistungsstation zum Bereitstellen einer ersten Dienstleistung und danach einer zweiten Dienstleistungsstation zum Breitstellen einer zweiten Dienstleistungsstation usw. zugeordnet wird.

In der Regel weist das Fahrzeug mindestens ein Kommunikationsmodul auf. Weiterhin ist vorgesehen, dass das System ebenfalls mindestens ein Kommunikationsmodul aufweist, wobei in Ausgestaltung vorgesehen ist, dass hierbei der mindestens einen elektrischen Ladestation sowie der mindestens einen elektrischen Dienstleistungsstation jeweils ein Kommunikationsmodul zugeordnet ist. Das Kommunikationsmodul des Fahrzeugs sowie das mindestens eine Kommunikationsmodul des Systems tauschen hierbei über elektromagnetische Wellen Daten und/oder Informationen aus.

Falls für das Fahrzeug mindestens eine Dienstleistung bereitzustellen und/oder durchzuführen ist und falls der mindestens eine elektrische Energiespeicher des Fahrzeugs mit elektrischer Energie zu versorgen ist, ist es im Rahmen des Verfahrens möglich, dass das Fahrzeug mit dem System vorab kommuniziert und darüber informiert, welche mindestens eine Dienstleistung dem Fahrzeug bereitzustellen ist. Das System ist dazu ausgebildet, einen Aufenthalt des Fahrzeugs innerhalb des Systems vorab zu planen, wobei eine derartige Planung u. a. die Maßnahme umfasst, in welcher Reihenfolge das Fahrzeug einer jeweiligen Dienstleistungsstation zuzuordnen ist.

Sobald das Fahrzeug das System erreicht hat, das die mindestens eine elektrische Ladestation und die mindestens eine Dienstleistungsstation bzw. Servicestation aufweist, wird es an die mindestens eine elektrische Ladestation und/oder Dienstleistungsstation übergeben. Hierbei ist vorgesehen, dass für das vorzubereitende Fahrzeug mindestens eine Dienstleistung bereits gebucht wurde. Somit wird das Fahrzeug an jene mindestens eine Dienstleistungsstation übergeben, mit der die gebuchte Dienstleistung durchführbar ist. Falls es weiterhin erforderlich ist, den mindestens einen elektrischen Energiespeicher des Fahrzeugs mit elektrischer Energie zu versorgen und somit zu laden, wird das Fahrzeug gleichzeitig mit der mindestens einen Ladestation verbunden.

In Ausgestaltung ist es möglich, dass das Fahrzeug autonom zu einer jeweils vorgesehenen Dienstleistungsstation bzw. Ladestation fährt. Eine hierbei zu berücksichtigende Route bzw. Strecke innerhalb des Systems, die angibt, wie das Fahrzeug von einer ersten Dienstleistungsstation bzw. Ladestation zu einer zweiten Dienstleistungsstation bzw. Ladestation und ggf. zu mindestens einer weiteren Dienstleistungsstation bzw. Ladestation zu fahren ist, wird hierbei dem Fahrzeug von dem System bereitgestellt. Es ist alternativ oder ergänzend jedoch auch möglich, dass das Fahrzeug mit einzelnen Dienstleistungsstationen bzw. Ladestationen innerhalb des Systems kommuniziert und dabei von Dienstleistungsstation bzw. Ladestation zu Dienstleistungsstation bzw. Ladestation gelotst wird. Dies betrifft in Ausgestaltung auch die Maßnahme, dass eine anzufahrende Dienstleistungsstation bzw. Ladestation für das Fahrzeug als Ziel definiert wird, wobei vorgesehen ist, dass das Fahrzeug diese Dienstleistungsstation bzw. Ladestation identifiziert und automatisch anfährt.

Eine jeweilige Position des Fahrzeugs innerhalb des Systems und somit relativ zu den Dienstleistungsstationen sowie Ladestationen ist bspw. auch durch mindestens eine Kamera zu erfassen, die ebenfalls als Komponente des Systems ausgebildet ist. Somit ist das System dazu ausgebildet, das Fahrzeug über die mindestens eine Kamera optisch zu orten. Weiterhin ist es ebenfalls möglich, dass das System das Fahrzeug durch Kommunikation mit dem Fahrzeug ortet. Mit der mindestens einen Kamera ist eine Bilderkennung durchführbar, wobei vorgesehen ist, dass die mindestens eine Kamera innerhalb des Systems an einer erhöhten Position angeordnet ist, wobei ein Abstand der mindestens einen Kamera zu einem Boden bzw. Untergrund größer als eine Höhe des Fahrzeugs ist.

Während sich das Fahrzeug innerhalb des Systems befindet, wird zwischen dem Fahrzeug und dem System, üblicherweise zwischen dem Fahrzeug und der mindestens einen Dienstleistungsstation des Systems, eine bspw. ständige Kommunikationsverbindung aufgebaut. Somit ist es möglich, das Fahrzeug innerhalb des Systems relativ zu der mindestens einen Dienstleistungsstation zu orten sowie dem Fahrzeug auch Informationen darüber bereitzustellen, wann dem Fahrzeug die mindestens eine Dienstleistung bereitgestellt wird, wie weit diese vorangeschritten und wann diese beendet ist.

Hierbei ist es ebenfalls möglich, dass eine Route des Fahrzeugs innerhalb des Systems aktualisiert wird. Unter Berücksichtigung dessen, werden dem Fahrzeug Informationen darüber bereitgestellt, welche Dienstleistungsstation das Fahrzeug jeweils anzufahren hat.

Es ist bspw. möglich, dass die mindestens eine Dienstleistungsstation als Waschstraße ausgebildet ist. Auch in diesem Fall wird von dem System eine jeweils aktuelle Position des Fahrzeugs von der mindestens einen Kamera durch Bilderkennung erfasst, wobei auch berücksichtigt wird, wie das Fahrzeug jeweils aktuell zu der Waschstraße als mögliche Dienstleistungsstation positioniert ist. Sobald das Fahrzeug eine für die Waschstraße definierte Position erreicht hat, an der für das Fahrzeug ein Waschprogramm ausführbar ist, so dass das Fahrzeug gereinigt wird, wird dieses Waschprogramm gestartet. Eine derartige Waschstraße umfasst bspw. rotierende Bürsten, Wasserdüsen und Ultraschallsensoren. Über die Ultraschallsensoren wird eine jeweilige Position einer rotierenden Bürste und einer Wasserdüse relativ zu einer Kontur und somit zu einer Außenwandung des Fahrzeugs ermittelt. Somit ist es bei Durchführung des Waschprogramms möglich, die rotierenden Bürsten und die Wasserdüsen relativ zu der Kontur des Fahrzeugs zu bewegen und dieses dabei zu reinigen. Sobald das Waschprogramm bzw. ein Waschvorgang als Dienstleistung beendet ist, wird dies dem Fahrzeug ausgehend von dem System mitgeteilt.

In Ausgestaltung wird das Fahrzeug von der, mit der und/oder an der mindestens einen Dienstleistungsstation gereinigt und/oder gewartet. Außerdem ist es möglich, dass dem Fahrzeug von der, mit der und/oder an der mindestens einen Dienstleistungsstation mindestens eine Substanz hinzugefügt wird. Bei dieser mindestens einen Substanz handelt es sich bspw. um ein zum Betreiben des Fahrzeugs erforderliches Betriebsmittel, das erneuert und/oder ersetzt wird. Bei der mindestens einen Substanz handelt es sich alternativ oder ergänzend um ein Lebensmittel, bspw. ein festes Lebensmittel und/oder ein als Getränk ausgebildetes flüssiges Lebensmittel, das von Insassen des Fahrzeugs verzehrt wird und ebenfalls erneuerbar und/oder ersetzbar ist. Die mindestens eine Substanz ist bspw. als sog. Verbrauchsmaterial ausgebildet und/oder zu bezeichnen, wobei es sich bspw. um ein Getränk oder Lebensmittel, d. h. eine Mahlzeit oder einen Snack, das von einem Nutzer des Fahrzeugs konsumierbar ist, handelt. Die mindestens eine Substanz ist weiterhin als Betriebsmittel bzw. als Betriebsstoff für das Fahrzeug ausgebildet, das bzw. der regelmäßig zu erneuern und/oder zu wechseln bzw. auszutauschen ist. Ein Betriebsmittel ist bspw. Öl zum Schmieren mindestens einer Einrichtung des Fahrzeugs oder Luft für Reifen des Fahrzeugs, deren Luftdruck bspw. durch Zuführen von Luft auf einen jeweils vorgesehenen Sollwert einstellbar ist.

Alternativ oder ergänzend wird von der, mit der und/oder an der mindestens einen Dienstleistungsstation mindestens eine Einstellung eines Geräts des Fahrzeugs gemäß einer Vorgabe angepasst. Hierzu weist die mindestens eine Dienstleistungsstation eine Schnittstelle auf, über die die mindestens eine Dienstleistungsstation mit dem mindestens einen Gerät des Fahrzeugs verbunden wird, wobei von der mindestens einen Dienstleistungsstation über die Schnittstelle Daten an das mindestens eine Gerät übertragen werden, mit denen dessen Einstellung gemäß der Vorgabe vorgenommen und/oder aktualisiert werden.

Ein Einstellen des mindestens einen Geräts durch die mindestens eine Dienstleistungsstation umfasst in Ausgestaltung auch die Maßnahme, dass mindestens eine Komponente des mindestens einen Geräts gegen mindestens eine neue Komponente für das mindestens eine Gerät ausgetauscht und/oder ersetzt wird. Es ist ebenfalls möglich, dass das mindestens eine Gerät durch mindestens eine neue Komponente ergänzt wird und/oder mindestens eine bereits vorhandene Komponente des mindestens einen Geräts entfernt wird. Ein Entfernen mindestens einer bereits vorhandenen Komponente des mindestens einen Geräts und/oder ein Ergänzen des mindestens einen Geräts um die mindestens eine neue Komponente wird zumindest teilweise, ggf. vollständig von mindestens einem Roboter der mindestens einen Dienstleistungsstation durchgeführt. Es ist weiterhin möglich, dass ein derartiges Ergänzen und/oder Ersetzen zumindest teilweise manuell durchgeführt wird.

In Ausgestaltung wird vorab bzw. bevor das Fahrzeug dem System zugeordnet wird, geplant, ausgewählt und ermittelt, welcher mindestens einen Dienstleistungsstation das Fahrzeug zuzuordnen ist.

Zum Durchführen des elektrischen Ladevorgangs wird der mindestens eine elektrische Energiespeicher über das mindestens eine elektrische Übertragungsmodul mit der mindestens einen elektrischen Ladestation verbunden. Dabei ist das mindestens eine elektrische Übertragungsmodul als Komponente des Systems oder als Komponente des Fahrzeugs ausgebildet.

In Ausgestaltung wird für das Fahrzeug bei dem System ein Termin zum Vorbereiten des Fahrzeugs auf die mindestens eine zukünftige Fahrt beantragt, wobei eine Information darüber bereitgestellt wird, welche mindestens eine Dienstleistung für das Fahrzeug zusätzlich zu einem Laden des mindestens einen elektrischen Energiespeichers bereitgestellt werden soll. Ausgehend hiervon wird von dem System unter Berücksichtigung mindestens eines weiteren Termins, der für mindestens ein weiteres Fahrzeug beantragt und/oder geplant ist, dem Fahrzeug von dem System eine Information über einen Zeitpunkt des beantragten Termins übermittelt und der Termin somit vereinbart. Zur Koordination des Termins tauschen das Fahrzeug und das System über die Kommunikationsmodule Informationen aus.

Das Verfahren wird für ein automatisch fahrendes Fahrzeug durchgeführt, das dazu ausgebildet ist, sich selbsttätig zu bewegen.

Außerdem ist es möglich, dass eine aktuelle Position des Fahrzeugs ermittelt wird. Unter Berücksichtigung dieser aktuellen Position, einer Position des Systems sowie des Zeitpunkts für den vereinbarten Termin wird für das Fahrzeug eine Route zum Erreichen des Systems geplant.

Bei dem erfindungsgemäßen Verfahren zum Vorbereiten mehrerer Fahrzeuge auf zukünftige Fahrten wird jeweils ein Fahrzeug durch eine Ausführungsform des erfindungsgemäßen Verfahrens auf mindestens eine, für ein jeweiliges Fahrzeug vorgesehene zukünftige Fahrt vorbereitet. Mit dem System ist es möglich, mehreren Fahrzeugen sequentiell Dienstleistungen bereitzustellen und deren elektrische Energiespeicher zu laden. In Ausgestaltung ist es möglich, dass sich zu einem Zeitpunkt mehrere Fahrzeuge innerhalb des Systems befinden, wobei jedes Fahrzeug jeweils nach einer Ausführungsform des vorgestellten Verfahrens auf jeweils eine zukünftige Fahrt vorbereitet wird. Dabei ist es zeitgleich möglich, dass ein m-tes Fahrzeug einer m-ten Dienstleistungsstation und mindestens ein n-tes Fahrzeug mindestens einer n-ten Dienstleistungsstation zugeordnet wird. Entsprechend wird das m-te Fahrzeug einer m-ten Ladestation und das mindestens eine n-te Fahrzeug mindestens einer n-ten Ladestation zugeordnet.

Sobald das Fahrzeug auf die mindestens eine zukünftige Fahrt vorbereitet ist, ist diese durchführbar. Das Verfahren ist in der Regel wieder dann durchzuführen, sobald dessen mindestens einer elektrische Energiespeicher wieder zu laden und ihm die mindestens eine Dienstleistung bereitzustellen ist, was nach mindestens einer Fahrt, d. h. lediglich nach einer Fahrt oder nach mehreren Fahrten, erforderlich ist.

Das erfindungsgemäße System ist zum Vorbereiten eines Fahrzeugs für bzw. auf mindestens eine zukünftige Fahrt ausgebildet, wobei das Fahrzeug mindestens einen elektrischen Energiespeicher aufweist, mit dem mindestens eine zum Antreiben des Fahrzeugs ausgebildete Elektromaschine des Fahrzeugs mit elektrischer Energie versorgt wird und/oder zu versorgen ist. Das System weist mindestens eine elektrische Ladestation und mehrere Dienstleistungsstationen auf, wobei das Fahrzeug den Dienstleistungsstationen zuordenbar ist, wobei die Dienstleistungsstationen dazu ausgebildet sind, dem Fahrzeug mindestens eine Dienstleistung bereitzustellen, und wobei die mindestens eine elektrische Ladestation mit dem mindestens einen elektrischen Energiespeicher verbindbar ist, wobei ein Aufenthalt des Fahrzeugs innerhalb des Systems vorab geplant wird, wobei die Planung umfasst, in welcher Reihenfolge das Fahrzeug einer jeweiligen Dienstleistungsstation zuzuordnen ist, wobei das System mindestens ein elektrisches Übertragungsmodul aufweist, das dazu ausgebildet ist, die mindestens eine elektrische Ladestation zum Übertragen der elektrischen Energie mit dem mindestens einen elektrischen Energiespeicher zu verbinden, wobei das mindestens eine elektrische Übertragungsmodul zwischen mehreren Dienstleistungsstationen angeordnet ist und mehrere Dienstleistungsstationen miteinander verbindet und als Stromschiene ausgebildet ist, wobei dem Fahrzeug durch mindestens eine Dienstleistungsstation simultan zur Durchführung des Ladevorgangs mindestens eine Dienstleistung bereitgestellt wird, wobei das Fahrzeug ein als Stromabnehmer ausgebildetes elektrisches Übertragungsmodul aufweist, wobei über die mindestens zwei in elektrisch leitendem Kontakt stehenden elektrischen Übertragungsmodule des Systems und des Fahrzeugs Energie ausgehend von der Ladestation zu dem mindestens einen elektrischen Energiespeicher übertragen wird, wobei es möglich ist, dass sich das Fahrzeug relativ zu der Stromschiene bewegt.

Die mindestens eine elektrische Ladestation ist dazu ausgebildet, den mindestens einen elektrischen Energiespeicher mit elektrischer Energie zu versorgen. Dem Fahrzeug ist von der mindestens einen Dienstleistungsstation die mindestens eine Dienstleistung bereitstellbar und gleichzeitig ist der mindestens eine elektrische Energiespeicher durch die mindestens eine Ladestation mit elektrischer Energie versorgbar. Hierbei ist es möglich, dem Fahrzeug zeitgleich durch die mindestens eine Dienstleistungsstation mindestens eine Dienstleistung bereitzustellen und den mindestens einen Energiespeicher durch die mindestens eine Ladestation mit elektrischer Energie zu versorgen, wodurch es möglich ist, ein Laden des mindestens einen elektrischen Energiespeichers und ein Bereitstellen der mindestens einen Dienstleistung zu parallelisieren bzw. zu synchronisieren.

Die mindestens eine elektrische Ladestation ist mit mindestens einem elektrischen Übertragungsmodul des Systems zum Übertragen der elektrischen Energie zu dem mindestens einen elektrischen Energiespeicher verbindbar. Dabei ist vorgesehen, dass das mindestens eine Übertragungsmodul der mindestens einen Ladestation beweglich und mit der mindestens einen elektrischen Ladestation einerseits und mit dem Fahrzeug andererseits verbindbar ist. Das mindestens eine Übertragungsmodul ist zwischen mehreren Dienstleistungsstationen angeordnet und/oder verbindet mehrere Dienstleistungsstationen miteinander. In diesem Fall ist es möglich, dass das mindestens eine Übertragungsmodul als stromführende Schiene ausgebildet ist, die ortsfest installiert ist. Es ist vorgesehen, dass das Fahrzeug einen Stromabnehmer aufweist, der ebenfalls als elektrisches Übertragungsmodul ausgebildet ist und mit dem mindestens einen Übertragungsmodul des Systems entlang dieses Übertragungsmoduls verbunden wird und sich auch bei einer Bewegung des Fahrzeugs entlang des mindestens einen Übertragungsmoduls des Systems in einem elektrisch leitenden Kontakt befindet.

In Ausgestaltung weist die mindestens eine Dienstleistungsstation mindestens einen Roboter auf, der dazu ausgebildet ist, mindestens eine Dienstleistung zumindest teilweise automatisch bereitzustellen, bspw. mindestens ein Gerät des Fahrzeugs zu warten, zu reparieren, zu reinigen und/oder diesem mindestens einen Gerät Daten zu übertragen, mit denen das mindestens eine Gerät aktualisiert wird. Ergänzend ist es möglich, dass die mindestens eine Dienstleistung an der mindestens einen Dienstleistungsstation durch mindestens eine Person als Dienstleister zumindest teilweise manuell bereitgestellt wird.

Außerdem ist es möglich, dass die mindestens eine Dienstleistungsstation mindestens einen Spender aufweist, der dazu ausgebildet ist, dem Fahrzeug mindestens eine Substanz automatisch bereitzustellen und/oder hinzuzufügen.

Das System umfasst demnach mindestens eine Dienstleistungsstation bzw. Servicestation sowie mindestens eine in Ausgestaltung bewegliche Infrastruktur und somit elektrische Ladestation für ein bspw. selbstfahrendes Fahrzeug, das bspw. als Elektrofahrzeug ausgebildet und/oder zu bezeichnen ist.

Mit dem Verfahren ist es möglich, während eines Ladens des mindestens einen elektrischen Energiespeichers des Fahrzeugs dieses Fahrzeug auch zusätzlich zu pflegen und somit auf die vorgesehene mindestens eine zukünftige Fahrt vorzubereiten. Bei mindestens einer hierbei durchführbaren Dienstleistung handelt es sich bspw. um ein Waschen, in Ausgestaltung ein Waschen einer Außenwand des Fahrzeugs, um eine Reinigung, in Ausgestaltung um eine Reinigung eines Innenraums des Fahrzeugs, eine Durchführung einer Wartung bzw. einer Wartungsarbeit, um ein Nachfüllen einer Betriebsflüssigkeit, bspw. Bremsflüssigkeit, eines Schmieröls und/oder einer Flüssigkeit für eine Scheibenwischanlage, ein Bestücken mit Lebensmitteln und/oder Getränken sowie eine Personalisierung mindestens eines Geräts hinsichtlich eines bestimmten Kundenwunschs, wobei hierzu das mindestens eine Gerät an den Kundenwunsch als mögliche Vorgabe angepasst wird.

Das Verfahren ist auch für eine Flotte aus mehreren Fahrzeugen realisierbar, die selbstfahrend bzw. automatisch fahrend ausgebildet sowie elektrifiziert sind. Dabei ist es möglich, diese Fahrzeuge mit dem vorgestellten System mit elektrischer Energie zu laden, zu pflegen und/oder zu warten. Hierzu werden in Ausgestaltung für jedes Fahrzeug bestimmte Dienstleistungen ausgewählt, die von der mindestens einen Dienstleistungsstation bereitstellbar sind. Je nach Auslastung der Dienstleistungsstationen sowie mehrerer elektrischer Ladestationen, die als Komponenten des Systems ausgebildet sind, ist es möglich, gleichzeitig mehrere Fahrzeuge auf jeweils mindestens eine zukünftige Fahrt vorzubereiten.

Weiterhin ist es möglich, ein Laden des mindestens einen elektrischen Energiespeichers und die mindestens eine Dienstleistung, üblicherweise mindestens ein mit der mindestens einen Dienstleistung verbundenen Arbeitsschritt, gleichzeitig durchzuführen. In Ausgestaltung ist der mindestens eine elektrische Energiespeicher während des gesamten Verfahrens mit der mindestens einen elektrischen Ladestation verbunden. Währenddessen ist es möglich, die mindestens eine Dienstleistung, in der Regel mehrere Dienstleistungen, durch die mindestens eine Dienstleistungsstation für das Fahrzeug bereitzustellen. Dies umfasst auch die Maßnahme, dass für das Fahrzeug gleichzeitig mehrere Dienstleistungsstationen bereitstellbar sind, währenddessen der mindestens eine elektrische Energiespeicher mit der mindestens einen elektrischen Ladestation verbunden ist. Somit ist es möglich, zum Vorbereiten jeweils eines Fahrzeugs neben dem Laden des mindestens einen elektrischen Energiespeichers mindestens eine weitere Dienstleistung bereitzustellen, wodurch gegenüber einer Vorgehensweise, bei der einzelne Dienstleistungen nacheinander bereitgestellt werden und das Fahrzeug zusätzlich danach oder davor mit elektrischer Energie versorgt wird, Zeit zu sparen ist.

Somit ist es nunmehr möglich, ein Vorbereiten des Fahrzeugs, bspw. eine Pflege des Fahrzeugs und ein Laden des mindestens einen elektrischen Energiespeichers, zu parallelisieren bzw. simultan durchzuführen, was bspw. auch hinsichtlich einer Wartung des Fahrzeugs im Rahmen einer Vorbereitung Raum und Zeit spart, was u. a. auch dann der Fall ist, wenn das vorzubereitende Fahrzeug ein autonom fahrendes Fahrzeug ist.

Bei einer möglichen Umsetzung des Verfahrens ist vorgesehen, dass mindestens ein Kommunikationsmodul des Systems mit einem Kommunikationsmodul des Fahrzeugs über elektromagnetische Wellen Informationen austauscht. Unter wechselseitigem Austausch derartiger Informationen zwischen dem Fahrzeug und dem System über die Kommunikationsmodule wird u. a. zur Planung einer Auslastung des Systems mindestens eine Dienstleistungsstation bzw. Servicestation für ein vorzubereitendes Fahrzeug reserviert, nach dem ausgehend von dem Fahrzeug an das System eine Liste jener Dienstleistungen übermittelt wurde, die für das Fahrzeug neben einem Laden des mindestens einen elektrischen Energiespeichers durchzuführen und/oder bereitzustellen sind. In Abhängigkeit einer Rückmeldung des Systems an das Fahrzeug wird eine für das Fahrzeug spezifische Strecke zum Erreichen des Systems ausgehend von einer aktuellen Position des Fahrzeugs optimiert. Außerdem ist es möglich, dass von dem Fahrzeug an das System eine Vorgabe für eine bereitzustellende Menge an Energie übermittelt wird.

In Ausgestaltung ist es möglich, dass das Fahrzeug bei einer Einfahrt in das System bspw. über ein als Stromabnehmer ausgebildetes elektrisches Übertragungsmodul des Fahrzeugs sowie über ein elektrisches Übertragungsmodul des Systems automatisch mit der mindestens einen elektrischen Ladestation und somit mit einer Ladeinfrastruktur gekoppelt wird. Ein für den mindestens einen elektrischen Energiespeicher durchzuführender Ladevorgang ist in Ausgestaltung auf mehrere Ladestationen des Systems verteilbar. Hierdurch wird u. a. sichergestellt, dass eine angeforderte Menge an Energie eingehalten wird und/oder bereitstellbar ist. Eine Abrechnung für das Fahrzeug wird auf Basis einer abgenommenen Menge an Energie bereitgestellt. Dabei ist es möglich, dass diese Menge an elektrischer Energie von mehreren Ladestationen anteilig bereitgestellt wird.

Die mindestens eine Ladestation wird über das mindestens eine Lademodul mit dem mindestens einen elektrischen Energiespeicher des Fahrzeugs verbunden. Dabei ist vorgesehen, dass das mindestens eine Übertragungsmodul als Schleifkontakt und somit als Stromabnehmer ausgebildet ist, über den das Fahrzeug mit der Schiene der mindestens einen Ladestation elektrisch leitend verbunden wird. Die mindestens eine elektrische Ladestation bleibt während einer Dauer des Aufenthalts des Fahrzeugs in der Station und/oder in Abhängigkeit einer Differenz zwischen einem Soll-Ladezustand und einem Ist-Ladezustand des mindestens einen elektrischen Energiespeichers über das mindestens eine Übertragungsmodul mit diesem verbunden.

In Ausgestaltung ist vorgesehen, dass das Fahrzeug zu einem hierfür geplanten und/oder vorgesehenen zeitlichen Termin das System anfährt und/oder zu dem System gefahren wird. Dabei wird eine Position des Fahrzeugs, bspw. unter Umsetzung einer Mini-Multi-Routenplanung, von dem System vorgegeben. Weiterhin ist es möglich, dass das Fahrzeug mit einer Transporteinrichtung des Systems durch dieses transportiert wird. Hierbei ist es vorgesehen, das Fahrzeug über ein Verbindungselement, bspw. ein Schleppseil oder eine Schleppkette, mit der Transportvorrichtung des Systems zu verbinden, die das Fahrzeug wiederum über das Verbindungselement durch das System von Dienstleistungsstation zu Dienstleistungsstation zieht. Es ist jedoch auch möglich, dass das üblicherweise automatisch fahrende Fahrzeug das System selbsttätig von Dienstleistungsstation zu Dienstleistungsstation fährt. In Abhängigkeit einer jeweils erforderlichen Dienstleistung wird das Fahrzeug automatisch zu einem jeweiligen Abschnitt des Systems bewegt und/oder gelotst, dem eine jeweilige Dienstleistungsstation zugeordnet ist, mit der die jeweils erforderliche Dienstleistung bereitstellbar ist. Außerdem wird das Fahrzeug in Ausgestaltung bereits bei Erreichen des Systems mit der mindestens einen elektrischen Ladestation über das mindestens eine Übertragungsmodul in der Regel automatisch verbunden. Das Fahrzeug wird spätestens dann über das mindestens eine Übertragungsmodul mit der mindestens einen elektrischen Ladestation verbunden, wenn es innerhalb des Systems einen Abschnitt erreicht hat, dem die mindestens eine elektrische Ladestation zugeordnet ist.

Das System umfasst mehrere Dienstleistungsstationen, deren Dienstleistungen für ein Fahrzeug jeweils gebucht werden. So umfasst eine mögliche Dienstleistung ein Waschen des Fahrzeugs von außen, wobei ein derartiges Waschen abhängig von einem Verschmutzungsgrad durchführbar ist, wobei auf Grundlage des Verschmutzungsgrads festgelegt wird, welche Maßnahmen zum Waschen des Fahrzeugs hierfür durchzuführen sind. Zum Reinigen eines Innenraums des Fahrzeugs als mögliche Dienstleistung ist vorgesehen, das Fahrzeug automatisch zu entriegeln und/oder dessen Türen automatisch zu öffnen. Mindestens eine weitere Dienstleistung kann eine Durchführung einer Wartungsarbeit für das Fahrzeug umfassen. Außerdem wird dem Fahrzeug bei Umsetzung mindestens einer Dienstleistung eine Substanz bereitgestellt und somit hinzugefügt. Dies betrifft bspw. die Maßnahme, das Fahrzeug mit Lebensmitteln und/oder Getränken mit mindestens einer verzehrbaren Substanz zu bestücken. Es ist jedoch auch möglich, dem Fahrzeug bei Bereitstellung mindestens einer Dienstleistung eine Betriebsflüssigkeit nachzufüllen und somit ebenfalls mindestens eine Substanz hinzuzufügen.

Es ist ebenfalls möglich, bei Bereitstellung mindestens einer Dienstleistung das Fahrzeug und/oder dessen Ausstattung auf Basis eines Kundenwunschs als Vorgabe anzupassen. Hierbei ist es bspw. möglich, in dem Fahrzeug mindestens einen Kindersitz anzuordnen oder einen Bezug mindestens eines Sitzes, bspw. einen Bezug aus Stoff oder Leder, zu erneuern und/oder auszutauschen.

Durch Austausch von Informationen zwischen dem Kommunikationsmodul des Fahrzeugs und dem mindestens einen Kommunikationsmodul des Systems ist es möglich, ein von einem Kunden gewünschtes Intervall bzw. einen gewünschten Zeitraum zur Vorbereitung des Fahrzeugs zu berücksichtigen, wobei ein Beginn der Vorbereitung des Fahrzeugs für die mindestens eine zukünftige Fahrt sowie eine Dauer der Vorbereitung berücksichtigt werden. Weiterhin wird über das mindestens eine Kommunikationsmodul eine Verfügbarkeit des Systems und/oder der mindestens einen Dienstleistungsstation berücksichtigt. Außerdem ist es möglich, Informationen darüber bereitzustellen, welche Dienstleistungen durchführbar sind. Außerdem ist es möglich, über das mindestens eine Kommunikationsmodul die Vorbereitung des Fahrzeugs für bzw. auf die mindestens eine zukünftige Fahrt abzurechnen und ggf. zu bezahlen.

In Ausgestaltung ist es möglich, dass das Fahrzeug als möglichen Stromabnehmer bspw. in seinem Unterboden eine zusätzliche Ladedose aufweist, die beim Einfahren in das System, bspw. in eine Waschanlage als Dienstleistungsstation, automatisch mit der mindestens einen Ladestation und somit mit einem Stromnetz des Systems verbunden wird. Das mindestens eine Übertragungsmodul, das mit der mindestens einen elektrischen Ladestation verbindbar ist, ist bspw. als induktive Ladeplatte ausgebildet, die in einem Boden des Systems und/oder der mindestens einen Dienstleistungsstation angeordnet und mit dem Fahrzeug mitbewegt wird, wobei der mindestens eine elektrische Energiespeicher ausgehend von der mindestens einen elektrischen Ladestation mit elektrischer Energie versorgt wird.

Es versteht sich, dass die voranstehend genannten und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung eine Ausführungsform eines Systems gemäß dem Stand der Technik.
Figur 2 zeigt in schematischer Darstellung eine Ausführungsform des erfindungsgemäßen Systems.

Die Figuren werden zusammenhängend und übergreifend beschrieben, gleichen Komponenten sind dieselben Bezugsziffern zugeordnet.

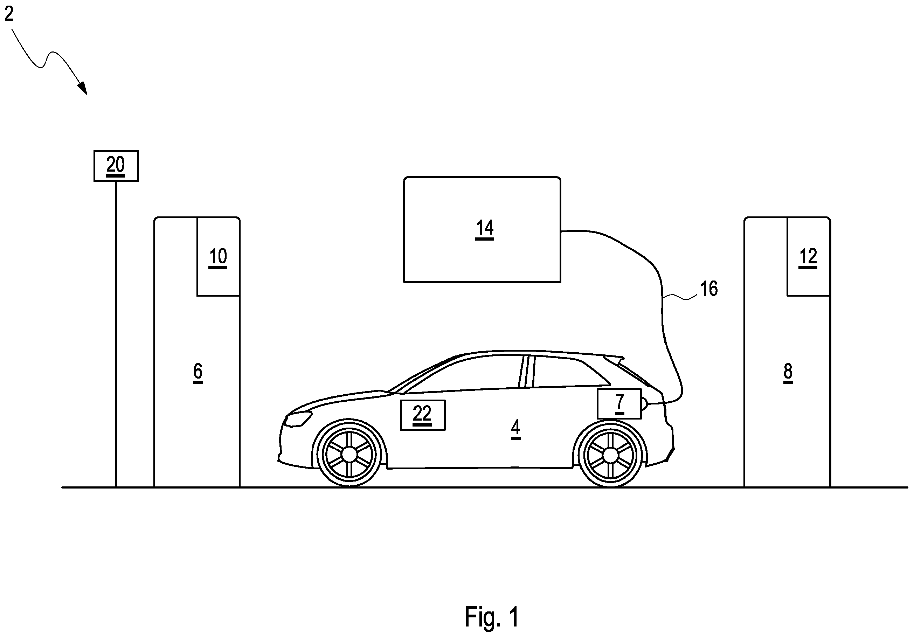

Die in Figur 1 schematisch dargestellte Ausführungsform des Systems 2 gemäß dem Stand der Technik ist dazu ausgebildet, ein Fahrzeug 4 auf mindestens eine zukünftige Fahrt vorzubereiten. Dabei umfasst das System 2 eine erste Dienstleistungsstation 6 und eine zweite Dienstleistungsstation 8. Dabei umfasst jede dieser beiden Dienstleistungsstationen 6, 8 einen Roboter 10, 12 zum Durchführen und/oder Bereitstellen einer jeweiligen Dienstleistung, wobei eine jeweilige Dienstleistung bspw. ein Reinigen mindestens einer Komponente des Fahrzeugs 4, ein Warten mindestens einer Komponente des Fahrzeugs 4 und/oder ein Anpassen mindestens einer Komponente bzw. mindestens eines Geräts des Fahrzeugs 4 auf die mindestens eine zukünftige Fahrt umfasst.

Außerdem ist vorgesehen, dass das Fahrzeug 4 mindestens einen elektrischen Energiespeicher 7 aufweist, der dazu ausgebildet ist, mindestens einer Elektromaschine des Fahrzeugs 4, mit der das Fahrzeug 4 fortbewegt und somit angetrieben wird, elektrische Energie bereitzustellen. Allerdings ist es regelmäßig erforderlich, den mindestens einen elektrischen Energiespeicher 7 ebenfalls mit elektrischer Energie zu versorgen und somit aufzuladen. Hierzu weist die erste Ausführungsform des Systems 2 eine elektrische Ladestation 14 auf, der weiterhin ein hier als Kabel 16 ausgebildetes elektrisches Übertragungsmodul zugeordnet ist, über das der mindestens eine elektrische Energiespeicher 7 des Fahrzeugs 4 mit der Ladestation 14 zum Durchführen eines elektrischen Ladevorgangs verbindbar ist.

Bei einer Ausführungsform eines Verfahrens ist hier vorgesehen, dass dem Fahrzeug 4 durch mindestens eine Dienstleistungsstation 6, 8 mindestens eine Dienstleistung bereitgestellt wird, wobei der mindestens eine elektrische Energiespeicher 7 des Fahrzeugs 4 während einer Bereitstellung der mindestens einen Dienstleistung von der elektrischen Ladestation 14 mit elektrischer Energie geladen wird, was auch dann möglich ist, wenn sich das Fahrzeug 4 bewegt.

Ferner weist das System 2 mindestens ein Kommunikationsmodul 20 auf. Dabei ist es möglich, das das mindestens eine Kommunikationsmodul 20 mindestens einer Dienstleistungsstation 6, 8 und/oder Ladestation 14 zugeordnet ist. Das Fahrzeug 4 weist ebenfalls mindestens ein Kommunikationsmodul 22 auf. Somit ist es möglich, dass das System 2 und das Fahrzeug 4 über elektromagnetische Wellen Informationen austauschen. Im Rahmen des Verfahrens ist vorgesehen, dass das Fahrzeug 4 mit dem System 2 Kontakt aufnimmt, wobei das Fahrzeug 4 und das System 2 einen Termin vereinbaren, zu dem dem Fahrzeug 4 die Dienstleistungen bereitstellbar sind und der elektrische Ladevorgang durchführbar ist. Bei einem Vereinbaren des Termins zwischen dem Fahrzeug 4 und dem System 2 werden u. a. darüber Informationen ausgetauscht, welche Dienstleistung für das Fahrzeug 4 erforderlich ist und welche Menge an elektrischer Energie in den mindestens einen Energiespeicher 7 zu laden ist.

Sobald sich das Fahrzeug 4 in dem System 2 befindet, ist in Ausgestaltung vorgesehen, dass das Fahrzeug 4 und die mindestens eine Dienstleistungsstation 6, 8 sowie Ladestation 14 Informationen austauschen. Hierdurch ist u. a. das Fahrzeug 4 zu orten. Dem Fahrzeug 4 sind ebenfalls darüber Inforationen bereitzustellen, auf welcher Strecke bzw. Route das Fahrzeug 6 innerhalb des Systems 4 von einer Dienstleistungsstation 6, 8 und/oder Ladestation 14 zu einer nachfolgenden Dienstleistungsstation 6, 8 und/oder Ladestation 14 üblicherweise automatisch zu bewegen ist.

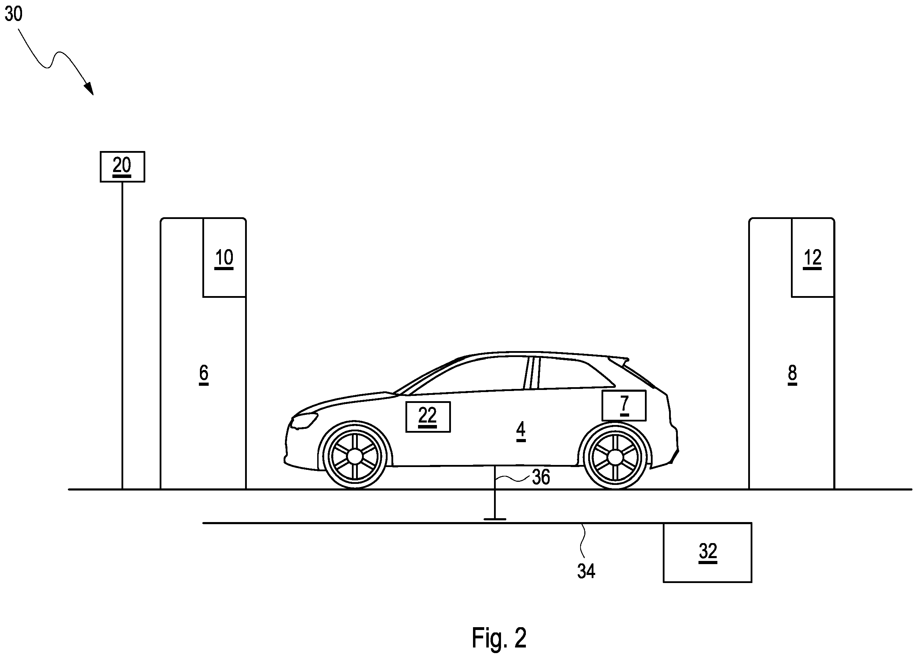

Die in Figur 2 dargestellte Ausführungsform des erfindungsgemäßen Systems 30 ist dazu ausgebildet, ein Fahrzeug 4 auf mindestens eine zukünftige Fahrt vorzubereiten. Dabei umfasst diese zweite Ausführungsform des Systems 30 genauso wie die erste Ausführungsform des Systems 2 eine erste Dienstleistungsstation 6 und eine zweite Dienstleistungsstation 8, wobei jede dieser beiden Dienstleistungsstationen 6, 8 einen Roboter 10, 12 zum Durchführen und/oder Bereitstellen einer jeweiligen Dienstleistung umfasst.

Zum Durchführen eines Ladevorgangs für den mindestens einen elektrischen Energiespeicher 7 des Fahrzeugs 4 weist die zweite Ausführungsform des Systems 30 eine elektrische Ladestation 32 auf, der weiterhin ein als Stromschiene 34 ausgebildetes elektrisches Übertragungsmodul zugeordnet ist.

Außerdem weist das Fahrzeug 4 ein als Stromabnehmer 36 ausgebildetes elektrisches Übertragungsmodul auf. Zum Durchführen des Ladevorgangs wird der Stromabnehmer 36 des Fahrzeugs 4 mit der Stromschiene 34 des Systems 30 verbunden. Über die beiden in elektrisch leitendem Kontakt stehenden elektrischen Übertragungsmodule wird Energie ausgehend von der Ladestation 32 zu dem mindestens einen elektrischen Energiespeicher 7 übertragen, wobei es möglich ist, dass sich das Fahrzeug 4 relativ zu der Stromschiene 34 bewegt.

Außerdem wird bei einer Ausführungsform des erfindungsgemäßen Verfahrens dem Fahrzeug 4 durch mindestens eine Dienstleistungsstation 6, 8 simultan zur Durchführung des Ladevorgangs mindestens eine Dienstleistung bereitgestellt.

## Patentansprüche

1. Verfahren zum Vorbereiten eines Fahrzeugs (4) auf mindestens eine zukünftige Fahrt, wobei das Fahrzeug (4) mindestens einen elektrischen Energiespeicher (7) aufweist, mit dem mindestens eine zum Antreiben des Fahrzeugs (4) ausgebildete Elektromaschine des Fahrzeugs (4) mit elektrischer Energie versorgt wird, wobei das Fahrzeug (4) einem System (30) zugeordnet wird, das mindestens eine elektrische Ladestation (32) und mehrere Dienstleistungsstationen (6, 8) aufweist, wobei das Fahrzeug (4) weiterhin den Dienstleistungsstationen (6, 8) zugeordnet wird, mit denen für das Fahrzeug (4) mindestens eine Dienstleistung bereitgestellt wird, und wobei der mindestens eine elektrische Energiespeicher (7) während der Bereitstellung der mindestens einen Dienstleistung mit der mindestens einen elektrischen Ladestation (32) verbunden und durch diese mindestens eine elektrische Ladestation (32) mit elektrischer Energie versorgt wird, **dadurch gekennzeichnet, dass** ein Aufenthalt des Fahrzeugs (4) innerhalb des Systems (30) vorab geplant wird, wobei die Planung umfasst, in welcher Reihenfolge das Fahrzeug (4) einer jeweiligen Dienstleistungsstation (6, 8) zuzuordnen ist, wobei das System (30) mindestens ein elektrisches Übertragungsmodul (34) aufweist, das dazu ausgebildet ist, die mindestens eine elektrische Ladestation (32) zum Übertragen der elektrischen Energie mit dem mindestens einen elektrischen Energiespeicher (7) zu verbinden, wobei das mindestens eine elektrische Übertragungsmodul (34) zwischen mehreren Dienstleistungsstationen (6, 8) angeordnet ist und mehrere Dienstleistungsstationen (6, 8) miteinander verbindet und als Stromschiene (34) ausgebildet ist, wobei dem Fahrzeug (4) durch mindestens eine Dienstleistungsstation (6, 8) simultan zur Durchführung des Ladevorgangs mindestens eine Dienstleistung bereitgestellt wird, wobei das Fahrzeug (4) ein als Stromabnehmer (36) ausgebildetes elektrisches Übertragungsmodul (36) aufweist, wobei über die mindestens zwei in elektrisch leitendem Kontakt stehenden elektrischen Übertragungsmodule (34, 36) des Systems (30) und des Fahrzeugs (4) Energie ausgehend von der Ladestation (32) zu dem mindestens einen elektrischen Energiespeicher (7) übertragen wird, wobei es möglich ist, dass sich das Fahrzeug (4) relativ zu der Stromschiene (34) bewegt.

2. Verfahren nach Anspruch 1, bei dem das Fahrzeug (4) von mindestens einer Dienstleistungsstation (6, 8) gereinigt und/oder gewartet wird.

3. Verfahren nach Anspruch 2, bei dem dem Fahrzeug (4) von der mindestens einen Dienstleistungsstation (6, 8) mindestens eine Substanz hinzugefügt wird.

4. Verfahren nach Anspruch 2 oder 3, bei dem von der mindestens einen Dienstleistungsstation (6, 8) mindestens eine Einstellung eines Geräts des Fahrzeugs (4) gemäß einer Vorgabe angepasst wird.

5. Verfahren nach der Ansprüche 2 bis 4, bei dem ausgewählt und ermittelt wird, welcher mindestens einen Dienstleistungsstation (6, 8) das Fahrzeug (4) zuzuordnen ist, bevor das Fahrzeug (4) dem System (30) zugeordnet wird.

6. Verfahren nach einem der voranstehenden Ansprüche, das für ein automatisch fahrendes Fahrzeug (4) durchgeführt wird.

7. Verfahren nach einem den voranstehenden Ansprüche, bei dem für das Fahrzeug (4) bei dem System (30) ein Termin zum Vorbereiten des Fahrzeugs (4) auf die mindestens eine zukünftige Fahrt beantragt wird, wobei eine Information darüber bereitgestellt wird, welche mindestens eine Dienstleistung für das Fahrzeug (4) zusätzlich und gleichzeitig zu einem Laden des mindestens einen elektrischen Energiespeichers (7) bereitgestellt werden soll, wobei von dem System (30) unter Berücksichtigung mindestens eines weiteren Termins, der für mindestens ein weiteres Fahrzeug geplant ist, dem Fahrzeug (4) von dem System (30) eine Information über einen Zeitpunkt des beantragten Termins übermittelt wird.

8. Verfahren zum Vorbereiten mehrerer Fahrzeuge (4) auf zukünftige Fahrten, wobei jeweils ein Fahrzeug (4) durch ein Verfahren nach einem der voranstehenden Ansprüche auf mindestens eine zukünftige Fahrt vorbereitet wird.

9. System zum Vorbereiten eines Fahrzeugs (4) auf mindestens eine zukünftige Fahrt, wobei das Fahrzeug (4) mindestens einen elektrischen Energiespeicher (7) aufweist, mit dem mindestens eine zum Antreiben des Fahrzeugs (4) ausgebildete Elektromaschine des Fahrzeugs (4) mit elektrischer Energie zu versorgen ist, wobei das System (30) mindestens eine elektrische Ladestation (32), die dazu ausgebildet ist, dem Energiespeicher (7) elektrische Energie bereitzustellen, und mehrere Dienstleistungsstationen (6, 8), die dazu ausgebildet sind, dem Fahrzeug (4) mindestens eine Dienstleistung bereitzustellen, aufweist, wobei das Fahrzeug (4) dem System (30) und weiterhin den Dienstleistungsstationen (6, 8) zuordenbar ist, mit denen für das Fahrzeug (4) mindestens eine Dienstleistung (6, 8) bereitstellbar ist, und wobei der mindestens eine elektrische Energiespeicher (7) während der Bereitstellung der mindestens einen Dienstleistung mit der mindestens einen elektrischen Ladestation (32) verbindbar und durch diese mindestens eine elektrische Ladestation (32) mit elektrischer Energie versorgbar ist, **dadurch gekennzeichnet, dass** ein Aufenthalt des Fahrzeugs (4) innerhalb des Systems (30) vorab geplant wird, wobei die Planung umfasst, in welcher Reihenfolge das Fahrzeug (4) einer jeweiligen Dienstleistungsstation (6, 8) zuzuordnen ist, wobei das System (30) mindestens ein elektrisches Übertragungsmodul (34, 36) aufweist, das dazu ausgebildet ist, die mindestens eine elektrische Ladestation (32) zum Übertragen der elektrischen Energie mit dem mindestens einen elektrischen Energiespeicher (7) zu verbinden, wobei das mindestens eine elektrische Übertragungsmodul (34) zwischen mehreren Dienstleistungsstationen (6, 8) angeordnet ist und mehrere Dienstleistungsstationen (6, 8) miteinander verbindet und als Stromschiene (34) ausgebildet ist, wobei dem Fahrzeug (4) durch mindestens eine Dienstleistungsstation (6, 8) simultan zur Durchführung des Ladevorgangs mindestens eine Dienstleistung bereitgestellt wird, wobei das Fahrzeug (4) ein als Stromabnehmer (36) ausgebildetes elektrisches Übertragungsmodul (36) aufweist, wobei über die mindestens zwei in elektrisch leitendem Kontakt stehenden elektrischen Übertragungsmodule (34, 36) des Systems (30) und des Fahrzeugs (4) Energie ausgehend von der Ladestation (32) zu dem mindestens einen elektrischen Energiespeicher (7) übertragen wird, wobei es möglich ist, dass sich das Fahrzeug (4) relativ zu der Stromschiene (34) bewegt.

10. System nach Anspruche 9, bei dem mindestens eine Dienstleistungsstation (6, 8) mindestens einen Roboter (10, 12) aufweist, der dazu ausgebildet ist, mindestens eine Dienstleistung automatisch bereitzustellen.

11. System nach Anspruch 10, bei dem die mindestens eine Dienstleistungsstation (6, 8) mindestens einen Spender aufweist, der dazu ausgebildet ist, dem Fahrzeug (4) mindestens eine Substanz automatisch bereitzustellen und/oder hinzuzufügen.

## Claims

1. Method for preparing a vehicle (4) for at least one future journey, wherein the vehicle (4) has at least one electrical energy storage unit (7) with which electrical energy is supplied to at least one electric motor of the vehicle (4) that is configured to drive the vehicle (4), wherein the vehicle (4) is associated with a system (30) that has at least one electrical charging station (32) and a plurality of servicing stations (6, 8), wherein the vehicle (4) is further associated with the servicing stations (6, 8), with which
at least one service operation is provided for the vehicle (4), and wherein the at least one electrical energy storage unit (7) is, during the provision of the at least one service operation, connected to the at least one electrical charging station (32) and is supplied with electrical energy by said at least one electrical charging station (32), **characterised in that** a stay of the vehicle (4) within the system (30) is planned in advance, wherein the planning comprises in which order the vehicle (4) is to be assigned to a respective servicing station (6, 8), wherein the system (30) has at least one electrical transmission module (34) that is configured to connect the at least one electrical charging station (32) to the at least one electrical energy storage unit (7) for transferring the electrical energy, wherein the at least one electrical transmission module (34) is arranged between a plurality of servicing stations (6, 8) and connects a plurality of servicing stations (6, 8) to one another and is in the form of a busbar (34), wherein at least one service operation is provided to the vehicle (4) by at least one servicing station (6, 8) simultaneously with the carrying out of the charging process, wherein the vehicle (4) has an electrical transmission module (36) in the form of a current collector (36), wherein, via the at least two
electrical transmission modules (34, 36) of the system (30) and of the vehicle (4) that are in electrically conducting contact, energy leaving the charging station (32) is transferred to the at least one electrical energy storage unit (7), wherein it is possible for the vehicle (4) to move relative to the busbar (34).

2. Method according to claim 1, wherein the vehicle (4) is cleaned and/or serviced by at least one servicing station (6, 8).

3. Method according to claim 2, wherein at least one substance is introduced into the vehicle (4) from the at least one servicing station (6, 8).

4. Method according to claim 2 or 3, wherein at least one setting of a device of the vehicle (4) is adjusted by the at least one servicing station (6, 8) in accordance with a specification.

5. Method according to claims 2 to 4, in which the at least one servicing station (6, 8) to which the vehicle (4) is to be assigned is selected and determined before the vehicle (4) is associated with the system (30).

6. Method according to any one of the preceding claims, which is carried out for an autonomously driving vehicle (4).

7. Method according to any one of the preceding claims, wherein an appointment is requested for the vehicle (4) at the system (30), for preparing the vehicle (4) for the at least one future journey, wherein information is provided about which at least one service operation is to be provided to the vehicle (4) in addition and simultaneously with
charging of the at least one electrical energy storage device (7), wherein, taking into account at least one further appointment scheduled for at least one further vehicle, information about a time of the requested appointment is transferred by the system (30) to the vehicle (4) from the system (30).

8. Method for preparing a plurality of vehicles (4) for future journeys, wherein one vehicle (4) at a time is prepared for at least one future journey by a method according to any one of the preceding claims.

9. System for preparing a vehicle (4) for at least one future journey, wherein the vehicle (4) has at least one electrical energy storage unit (7) with which electrical energy is to be supplied to at least one electric motor of the vehicle (4) that is configured to drive the vehicle (4), wherein the system (30) has at least one electrical charging station (32) that is configured to provide electrical energy to the energy storage unit (7), and a plurality of servicing stations (6, 8) that are configured to provide at least one service operation to the vehicle (4), wherein the vehicle (4) can be assigned to the system (30) and furthermore to the servicing stations (6, 8) with which at least one service operation (6, 8) can be provided for the vehicle (4),
and wherein the at least one electrical energy storage unit (7) can be connected to the at least one electrical charging station (32) during the provision of the at least one service operation and can be supplied with electrical energy by said at least one electrical charging station (32), **characterised in that** a stay of the vehicle (4) within the system (30) is planned in advance, wherein the planning comprises in which order the vehicle (4) is to be assigned to a respective servicing station (6, 8), wherein the system (30) has at least one electrical transmission module (34, 36) that is configured to connect the at least one electrical charging station (32) to the at least one electrical energy storage unit (7) for transferring the electrical energy, wherein the at least one electrical transmission module (34) is arranged between a plurality of servicing stations (6, 8) and connecting a plurality of servicing stations (6, 8) to one another and is in the form of a busbar (34), wherein at least one service operation is provided to the vehicle (4) by at least one servicing station (6, 8) simultaneously with the carrying out of the charging process, wherein the vehicle (4) has an electrical transmission module (36) that is in the form of a current collector (36), wherein, via the at least two electrical transmission modules (34, 36) of the system (30) and of the vehicle (4) that are in electrically conducting contact, energy leaving the charging station (32) is transferred to the at least one electrical energy storage unit (7), wherein it is possible for the vehicle (4) to move relative to the busbar (34).

10. System according to claim 9, wherein at least one servicing station (6, 8) comprises at least one robot (10, 12) that is configured to automatically provide at least one service operation.

11. System according to claim 10, wherein the at least one servicing station (6, 8) comprises at least one dispenser configured to automatically provide and/or introduce at least one substance to the vehicle (4).

## Revendications

1. Procédé de préparation d'un véhicule (4) à au moins un déplacement futur, dans lequel le véhicule (4) présente au moins un accumulateur d'énergie (7) électrique, avec lequel au moins un moteur électrique réalisé pour l'entraînement du véhicule (4) du véhicule (4) est alimenté en énergie électrique, dans lequel le véhicule (4) est associé à un système (30) qui présente au moins une station de charge (32) électrique et plusieurs stations de prestations de service (6, 8), dans lequel le véhicule (4) est en outre associé aux stations de prestations de service (6, 8), avec lesquelles pour le
véhicule (4) au moins une prestation de service est fournie, et dans lequel l'au moins un accumulateur d'énergie (7) électrique est relié pendant la fourniture d'au moins une prestation de service à l'au moins une station de charge (32) électrique et est alimenté par cette au moins une station de charge (32) électrique en énergie électrique, **caractérisé en ce qu'**un séjour du véhicule (4) est planifié au préalable dans le système (30), dans lequel la planification comporte l'ordre, dans lequel le véhicule (4) est à associer à une station de prestations de service (6, 8) respective, dans lequel le système (30) présente au moins un module de transmission (34) électrique qui est réalisé afin de relier au moins une station de charge (32) électrique pour la transmission de l'énergie électrique à l'au moins un accumulateur d'énergie (7) électrique, dans lequel l'au moins un module de transmission (34) électrique est agencé entre plusieurs stations de prestations de service (6, 8) et relie plusieurs stations de prestations de service (6, 8) entre elles et est réalisé comme rail conducteur (34), dans lequel au moins une prestation de service est fournie au véhicule (4) par au moins une station de prestations de service (6, 8) simultanément à la réalisation du processus de charge, dans lequel le véhicule (4) présente un module de transmission (36) électrique réalisé comme pantographe (36), dans lequel par le biais des au moins deux modules de transmission (34, 36) électriques se trouvant en contact électroconducteur
du système (30) et du véhicule (4), de l'énergie sortant de la station de charge (32) est transmise à l'au moins un accumulateur d'énergie (7) électrique, dans lequel il est possible que le véhicule (4) se déplace par rapport au rail conducteur (34).

2. Procédé selon la revendication 1, pour lequel le véhicule (4) est nettoyé et/ou entretenu par au moins une station de prestations de service (6, 8).

3. Procédé selon la revendication 2, pour lequel au moins une substance est ajoutée au véhicule (4) par l'au moins une station de prestations de service (6, 8).

4. Procédé selon la revendication 2 ou 3, pour lequel au moins un réglage d'un appareil du véhicule (4) est adapté selon une prescription par l'au moins une station de prestations de service (6, 8).

5. Procédé selon les revendications 2 à 4, pour lequel il est sélectionné et déterminé à laquelle au moins une station de prestations de service (6, 8) le véhicule (4) est à associer, avant que le véhicule (4) ne soit associé au système (30).

6. Procédé selon l'une quelconque des revendications précédentes, qui est réalisé pour un véhicule (4) à conduite automatique.

7. Procédé selon l'une quelconque des revendications précédentes, pour lequel pour le véhicule (4) pour le système (30) un délai pour la préparation du véhicule (4) à l'au moins un déplacement futur est demandé, dans lequel une information est fournie sur la au moins une prestation de service pour le véhicule (4) qui doit être
fournie en outre et simultanément à une charge d'au moins un accumulateur d'énergie (7) électrique, dans lequel une information sur un moment du délai demandé est transmis par le système (30) en tenant compte d'au moins un autre délai qui est planifié pour au moins un autre véhicule, au véhicule (4) par le système (30).

8. Procédé de préparation de plusieurs véhicules (4) à des déplacements futurs, dans lequel respectivement un véhicule (4) est préparé par un procédé selon l'une quelconque des revendications précédentes à au moins un déplacement futur.

9. Système de préparation d'un véhicule (4) à au moins un déplacement futur, dans lequel le véhicule (4) présente au moins un accumulateur d'énergie (7) électrique, avec lequel au moins un moteur électrique réalisé pour l'entraînement du véhicule (4) du véhicule (4) est à alimenter en énergie électrique, dans lequel le système (30) présente au moins une station de charge (32) électrique qui est réalisée afin de fournir à l'accumulateur d'énergie (7) de l'énergie électrique, et plusieurs stations de prestations de service (6, 8) qui sont réalisées afin de fournir au véhicule (4) au moins une prestation de service, dans lequel le véhicule (4) peut être associé au système (30) et en outre aux stations de prestations de service (6, 8), avec lesquelles pour le véhicule (4) au moins une
prestation de service (6, 8) peut être fournie, et dans lequel l'au moins un accumulateur d'énergie (7) électrique peut être relié pendant la fourniture d'au moins une prestation de service à l'au moins une station de charge (32) électrique et peut être alimenté par cette au moins une station de charge (32) électrique en énergie électrique, **caractérisé en ce qu'**un séjour du véhicule (4) est planifié au préalable dans le système (30), dans lequel la planification comporte l'ordre, dans lequel le véhicule (4) est à associer à une station de prestations de service (6, 8) respective, dans lequel le système (30) présente au moins un module de transmission (34, 36) électrique qui est réalisé afin de relier l'au moins une station de charge (32) électrique pour la transmission de l'énergie électrique à l'au moins un accumulateur d'énergie (7) électrique, dans lequel l'au moins un module de transmission (34) électrique est agencé entre plusieurs stations de prestations de service (6, 8) et relie plusieurs stations de prestations de service (6, 8) entre elles et est réalisé comme rail conducteur (34), dans lequel au moins une prestation de service est fournie au véhicule (4) par au moins une station de prestations de service (6, 8) simultanément à la réalisation du processus de charge, dans lequel le véhicule (4) présente un module de transmission (36) électrique réalisé comme pantographe (36), dans lequel par le biais d'au moins deux modules de transmission (34, 36) électriques se trouvant en contact électroconducteur du système (30) et du véhicule (4) de l'énergie sortant de la station de charge (32) est transmise à l'au moins un accumulateur d'énergie (7) électrique, dans lequel il est possible que le véhicule (4) se déplace par rapport au rail conducteur (34).

10. Système selon la revendication 9, pour lequel au moins une station de prestations de service (6, 8) présente au moins un robot (10, 12) qui est réalisé afin de fournir automatiquement au moins une prestation de service.

11. Système selon la revendication 10, pour lequel l'au moins une station de prestations de service (6, 8) présente au moins distributeur qui est réalisé afin de fournir et/ou d'ajouter automatiquement au moins une substance au véhicule (4).
